# EUROPÄISCHE PATENTSCHRIFT

(11) **EP 4 417 407 B1**
(45) Veröffentlichungstag und Bekanntmachung des Hinweises auf die Patenterteilung: **03.12.2025**
(21) Anmeldenummer: 24152009.7
(22) Anmeldetag: 16.01.2024
(51) Int. Cl.: B29D 30/24, B29D 30/32

(54) **VERFAHREN ZUR HERSTELLUNG EINES LUFTREIFENS**
METHOD OF MANUFACTURING A PNEUMATIC TIRE
PROCÉDÉ DE FABRICATION D'UN PNEUMATIQUE

(30) Priorität: 14.02.2023 DE 102023201207
(43) Veröffentlichungstag der Anmeldung: 21.08.2024
(73) Patentinhaber: Continental Reifen Deutschland GmbH, 30175 Hannover (DE)
(72) Erfinder: Mauruschat, Rainer, 30175 Hannover (DE); Knull, Stephan, 30175 Hannover (DE)
(74) Vertreter: Continental Corporation

(56) Entgegenhaltungen:
- DE-A1- 1 579 212
- DE-B- 1 159 163
- US-A- 4 290 472

## Beschreibung

Die Erfindung betrifft ein Verfahren zur Herstellung eines Luftreifens mit einer Innenschicht, einer Karkasslage, einem Wulstkern, einem Reifengürtel und einem Laufstreifen. Weiterhin betrifft die Erfindung eine Vorrichtung zur Herstellung eines Luftreifens mit einer expandierbaren Reifenbautrommel sowie axial zur Reifenbautrommel verfahrbaren Bälgen, und ein Computerprogrammprodukt.

Beim zweistufigen Reifenfertigungsverfahren wird beim Aufbau eines Luftreifens nach dem Aufwickeln einer Innenschicht und einer Karkasslage beispielsweise durch die Expansion der Karkasstrommel eine Schulter ausgebildet. Vor dem Lageumschlag wird ein Wulstkern gesetzt.

Für die Gleichförmigkeit eines Reifens ist es relevant, dass die Innenschicht sowie die Karkasslage über den Umfang gesehen zwischen den Wulstkernen geringe Längenunterschiede sowie eine gleichmäßige mechanische Spannung aufweisen. Die Gleichförmigkeitsanforderungen an Reifen steigen, wobei die Längenunterschiede der Innenschicht sowie der Karkasslage zwischen den Wulstkernen bei gleichbleibenden Prozessen aufgrund von Karkasslagen mit höherer Steifigkeit ansteigen. Bekannte Verfahren und Vorrichtungen erzeugen daher bei hohen Gleichförmigkeitsanforderung an den Reifen, insbesondere bei Verwendung von Karkasslagen mit hohen Steifigkeiten, erhöhten Ausschuss oder sind besonders aufwendig, wodurch die Zykluszeit ansteigt und die Wirtschaftlichkeit des Verfahrens sinkt. Patentschrift DE 11 59 163 B offenbart ein Reifenherstellungsverfahren unter Verwendung einer expandierbaren Trommel.

Vor diesem Hintergrund liegt der Erfindung die Aufgabe zugrunde, ein Verfahren und eine Vorrichtung sowie ein Computerprogrammprodukt derart auszuführen, dass ohne oder zumindest mit nur einer geringen Zykluszeiterhöhung prozesssicher Luftreifen mit einer Innenschicht sowie einer Karkasslage herstellbar sind, die über den Umfang gesehen zwischen den Wulstkernen besonders geringe Längenunterschiede aufweisen, um hohe Gleichförmigkeitsanforderungen an Luftreifen zuverlässig zu erfüllen.

Diese Aufgabe wird gelöst mit einem Verfahren gemäß den Merkmalen des Patentanspruches 1 sowie einer Vorrichtung und einem Computerprogrammprodukt gemäß den nebengeordneten Ansprüchen. Die Unteransprüche betreffen besonders zweckmäßige Weiterbildungen der Erfindung.

Erfindungsgemäß ist also eine Verfahren zur Herstellung eines Luftreifens mit einer Innenschicht, einer Karkasslage, einem Wulstkern, einem Reifengürtel und einem Laufstreifen mit den folgenden Schritten vorgesehen:
a) Auflegen der Innenschicht und der Karkasslage auf eine Reifenbautrommel und beidseits auf einen jeweils in axialer Richtung der Reifenbautrommel angeordneten Unterstützungsring mit jeweils einem Balg,
b) Axiales Verfahren der Bälge jeweils zum Erhöhen des Abstandes zur Reifenbautrommel,
c) Axiales Verfahren der Bälge jeweils zum Verringern des Abstandes zur Reifenbautrommel,
d) Ausbilden von Reifenschultern durch Expandieren der Reifenaufbautrommel,
e) Setzen eines Wulstkerns an der Karkasslage an der Trommelschulter,
f) Fixieren des Wulstkerns mit der radial verfahrbaren Kernfixierung,
g) Umschlagen der Karkasslage und der Innenschicht um den Wulstkern durch ein Befüllen eines Balgs,
h) Fertigstellen des Reifenrohlings mit weiteren Schritten.

Durch das axiale Auseinanderfahren der Bälge, werden die Innenschicht und die Karkasslage von den Bälgen gelöst, eine Relativbewegung findet statt. Durch das axiale Zusammenfahren der Bälge werden die axialen Enden der Innenschicht und der Karkasslage in axialer Richtung zusammengefahren. Über den Umfang werden hierdurch die Innenschicht und die Karkasslage im Bereich der Kernfixierungen auf einen größeren Radius verfahren, die Innenschicht wird von den Bälgen beabstandet. Bei einem darauffolgenden Expandieren der Reifenbautrommel führen die nicht aufliegenden Bereiche der Innenschicht sowie das geringere Anhaften der Innenschicht und der Karkasslage auf den Bälgen, in Bereichen, in denen die Innenschicht auf den Bälgen aufliegen, zu geringeren Längenunterschieden der Innenschicht und der Karkasslage zwischen den Wulstkernen. Weiterhin wird eine besonders gleichmäßige Spannung in der Innenschicht und der Karkasslage zwischen den Wulstkernen erreicht.

Eine bevorzugte Ausführungsform sieht vor, dass unmittelbar nach Schritt a) die Karkasslage an die Innenschicht angerollt wird. Ein Anrollen der Karkasslage an die Innenschicht verbessert die Haftung zwischen der Karkasslage und der Innenschicht, wodurch eine verringerte Relativbewegung zwischen diesen Schichten erreicht wird und somit ein besonders gleichförmiger Luftreifen erzeugbar wird.

Eine weitere bevorzugte Ausführungsform sieht vor, dass die Bälge jeweils synchron axial Verfahren werden zum Erhöhen des Abstandes zur Reifenbautrommel und bevorzugt jeweils zum Verringern des Abstandes zur Reifenbautrommel. Ein synchrones Verfahren der Bälge führt zu einer besonders gleichmäßigen Positionierung der Innenschicht und der Karkasslage. Das Anhaften der Innenschicht auf der Reifenbautrommel führt dazu, dass sich die Innenschicht beim synchronen Verfahren der Bälge nicht zur Reifenbautrommel bewegt und somit eine besonders symmetrische, von den Bälgen gelöste Auflage erzeugt wird.

Eine weitere bevorzugte Ausführungsform sieht vor, dass die Bälge in axialer Richtung mittels Elektromotoren, bevorzugt zusammen mit den Unterstützungsringen, verfahren werden. Es hat sich gezeigt, dass durch ein Verfahren mittels Elektromotoren ein besonders symmetrisches Ergebnis erzeugbar ist, da Elektromotoren ein besonders genaues zeitliches sowie räumliches Verfahren ermöglichen.

Eine weitere bevorzugte Ausführungsform sieht vor, dass die Bälge in axialer Richtung jeweils um eine Strecke verfahren werden, die zumindest 30 % bevorzugt zumindest 50 % und weiter bevorzugt zumindest 70 %, jedoch weniger als 100 % der Höhe der Trommelschulter nach der Expansion der Reifenbautrommel entspricht. Ein Verfahren der Bälge um zumindest 30 % der Strecke, die zum Ausbilden der Reifenschultern benötigt wird, erzeugt ein Lösen des Anhaftens der Innenschicht und der Karkasslage an den Bälgen sowie ein reproduzierbares auf den Umfang gleichmäßiges Aufwerfen der Innenschicht und der Karkasslage, so dass beim Ausbilden der Reifenschulter ein besonders gleichmäßiges Ergebnis erzielt wird.

Eine weitere bevorzugte Ausführungsform sieht vor, dass nach Schritt d) Anroller auf einen kleineren Radius verfahren werden, zum Anlegen der Innenschicht und der Karkasslage an die Trommelschulter. Das Verfahren der Anroller und das Anlegen der Innenschicht und der Karkasslage führen zu einer weiteren Vergleichmäßigung der Länge der Innenschicht und der Karkasslage zwischen den Wulstkernen.

Eine weitere bevorzugte Ausführungsform sieht vor, dass Schritt c) und d) zeitgleich ausgeführt werden. Ein zeitgleiches Ausführen der Schritte c) und d) verringert die Prozesszeit. Weiterhin wird die Zeit, die die Innenschicht mit den Bälgen nach der durchgeführten Relativbewegung und vor dem Ausbilden der Reifenschulter in Kontakt steht, was zu einer Erhöhung der an Haftung führen kann, geringgehalten.

Erfindungsgemäß ist eine Vorrichtung zum Ausführen des erfindungsgemäßen Verfahrens zur Herstellung eines Luftreifens mit einer expandierbaren Reifenbautrommel sowie axial zur Reifenbautrommel verfahrbaren Bälgen vorgesehen, wobei die Vorrichtung dazu eingerichtet ist ein Verfahren nach einem der vorhergehenden Ansprüche durchzuführen.

Eine derartige Vorrichtung ermöglicht das Durchführen des erfindungsgemäßen Verfahrens und somit das Erzeugen von Luftreifen mit einer Innenschicht sowie einer Karkasslage, die über den Umfang gesehen zwischen den Wulstkernen besonders geringe Längenunterschiede aufweisen.

Erfindungsgemäß ist eine Computerprogrammprodukt zum Ausführen des erfindungsgemäßen Verfahrens zum Betreiben einer Vorrichtung zur Herstellung eines Luftreifens vorgesehen, umfassend Befehle, die bei der Ausführung des Programms durch zumindest eine Prozessoreinheit diese veranlasst das erfindungsgemäße Verfahren auszuführen.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigt in
Fig. 1 eine expandierbare Reifenbautrommel mit einer Innenschicht und einer Karkasslage;
Fig. 2 die expandierbare Reifenbautrommel beim Verfahren der Bälge;
Fig. 3 die Reifenbautrommel im expandierten Zustand.

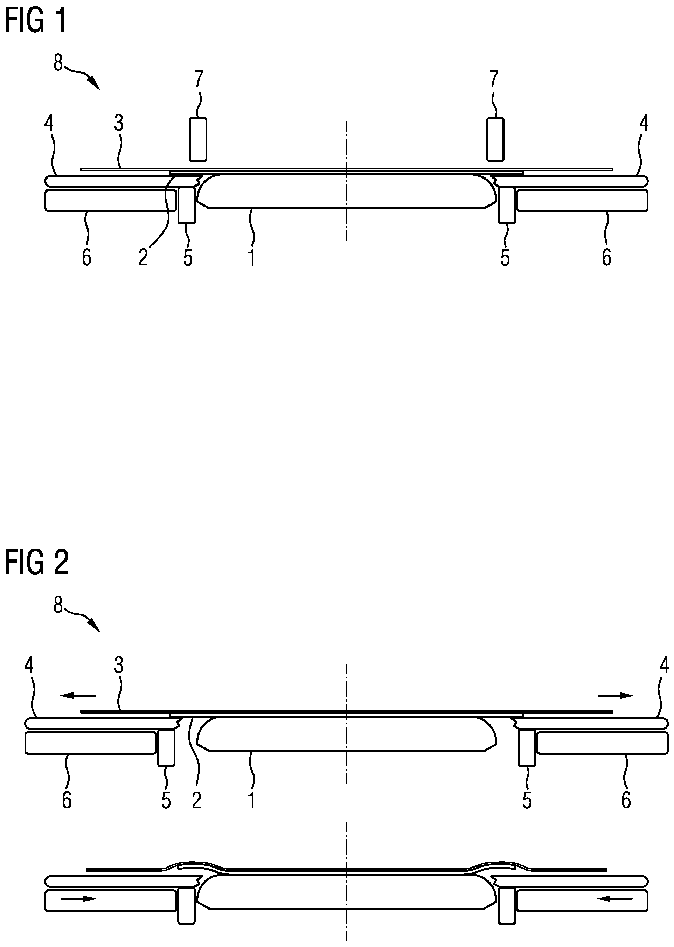

Figur 1 zeigt ein expandierbare Reifenbautrommel 1 auf die bereits eine Innenschicht 2 und eine Karkasslage 3 eines Luftreifens aufgelegt wurde. Die Reifenbautrommel 1 ist in einem nicht expandierten Zustand. In axialer Richtung der Reifenbautrommel 1 sind rechts und links neben der Reifenbautrommel 1 Bälge 4 und Kernfixierungen 5 angeordnet. Die Kernfixierungen 5 und Unterstützungsringe 6 sind in radialer Richtung der Reifenbautrommel 1 derart angeordnet, dass sich die Bälge 4 auf einem Radius befinden, der kleiner ist als der Radius der Oberfläche der Reifenbautrommel 1. Anroller 7 rollen die Karkasslage 3 an die Innenschicht 2 an.

Ein Expandieren der Reifenbautrommel 1 kann aufgrund des Anhaftens der Innenschicht 2 an einem Balg 4 zu einer Varianz auf dem Umfang führen bezüglich der mechanischen Spannung in der Innenschicht 2 und der Karkasslage 3.

Um diese Varianz zu verringern werden, wie in Figur 2 oben dargestellt, die Bälge 4, der aus der Figur 1 bekannten Vorrichtung 8, axial auseinandergefahren, so dass die auf den Bälgen 4 aufliegenden Innenschicht 2 sowie die Karkasslage 3 eine Relativbewegung zu den Bälgen 4 erfahren, da sie aufgrund eines Anhaftens an der Reifenbautrommel 1 ortsfest verbleiben. Ein Anhaften der Innenschicht 2 an den Bälgen 4 wird überwunden. Folgend, wie in Figur 2 unten dargestellt, werden die Bälge 4 in ihre Ausgangsposition zurückgefahren, wobei die Innenschicht 2 und die Karkasslage 3 aufgrund von Reibkräften an den Bälgen 4 im Kontaktbereich mit den Bälgen 4 verfahren werden. In den Bereichen in dem die Innenschicht 2 nicht auf den Bälgen 4 aufliegt wird die Innenschicht 2 und die Karkasslage 3 auf dem Umfang auf einen größeren Radius verfahren.

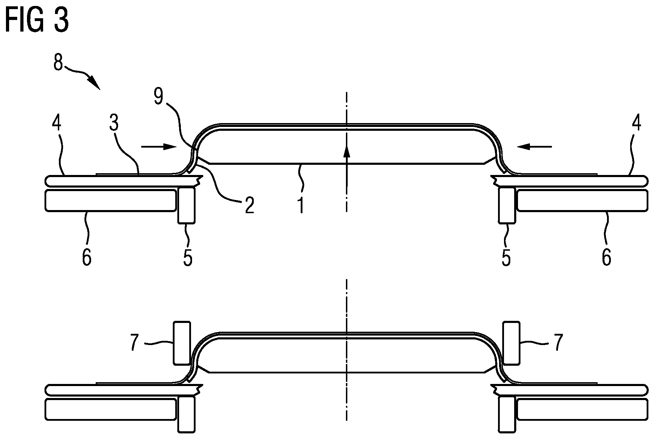

In Figur 3 ist die aus der Figur 1 bekannte Vorrichtung 8 mit der Reifenbautrommel 1 im expandierten Zustand dargestellt. Die Innenschicht 2 sowie die Karkasslage 3 liegen geometrisch gleichmäßig sowie mit gleichmäßiger Spannung an den Trommelschultern 9 an, da sie bereits vor dem Expandieren der Reifenbautrommel 1 von den Bälgen 4 gelöst waren. Wie in der Figur 3 unten dargestellt Verfahren nach der Expansion der Reifenbautrommel 1 die Anroller 7 entlang der Trommelschultern 9 bis zu den Bälgen 4 und erhöhen die Gleichmäßigkeit mit der die Innenschicht 2 und die Karkasslage 3 an den Trommelschultern 9 Anliegen.

Folgend werden Wulstkerne an der Karkasslage 3 gesetzt. Die Wulstkerne werden mit den Kernfixierungen 5 fixiert, bevor die Bälge 4 für einen Karkassumschlag befüllt werden.

### Bezugszeichenliste

- 1: Reifenbautrommel
- 2: Innenschicht
- 3: Karkasslage
- 4: Balg
- 5: Kernfixierung

- 6: Unterstützungsring
- 7: Anroller
- 8: Vorrichtung
- 9: Trommelschulter

## Patentansprüche

1. Verfahren zur Herstellung eines Luftreifens mit einer Innenschicht (2), einer Karkasslage (3), einem Wulstkern, einem Reifengürtel und einem Laufstreifen mit den folgenden Schritten:
a) Auflegen der Innenschicht (2) und der Karkasslage (3) auf eine Reifenbautrommel (1) und beidseits auf einen jeweils in axialer Richtung der Reifenbautrommel (1) angeordneten Unterstützungsring (6) mit jeweils einem Balg (4),
b) Axiales Verfahren der Bälge jeweils zum Erhöhen des Abstandes zur Reifenbautrommel (1),
c) Axiales Verfahren der Bälge jeweils zum Verringern des Abstandes zur Reifenbautrommel (1),
d) Ausbilden von Reifenschultern durch Expandieren der Reifenaufbautrommel,
e) Setzen eines Wulstkerns an der Karkasslage (3) an der Trommelschulter (9),
f) Fixieren des Wulstkerns mit der radial verfahrbaren Kernfixierung (5),
g) Umschlagen der Karkasslage (3) und der Innenschicht (2) um den Wulstkern durch ein Befüllen eines Balgs (4),
h) Fertigstellen des Reifenrohlings mit weiteren Schritten.

2. Verfahren nach Anspruch 1, **dadurch gekennzeichnet, dass** unmittelbar nach Schritt a) die Karkasslage (3) an die Innenschicht (2) angerollt wird.

3. Verfahren nach den Ansprüchen 1 oder 2, **dadurch gekennzeichnet, dass** die Bälge jeweils synchron axial Verfahren werden zum Erhöhen des Abstandes zur Reifenbautrommel (1) und bevorzugt jeweils zum Verringern des Abstandes zur Reifenbautrommel (1).

4. Verfahren nach einem der vorangehenden Ansprüche, **dadurch gekennzeichnet, dass** die Bälge in axialer Richtung mittels Elektromotoren, bevorzugt zusammen mit den Unterstützungsring (6), verfahren werden.

5. Verfahren nach einem der vorangehenden Ansprüche, **dadurch gekennzeichnet, dass** die Bälge in axialer Richtung jeweils um eine Strecke verfahren werden, die zumindest 30 % bevorzugt zumindest 50 % und weiter bevorzugt zumindest 70 %, jedoch weniger als 100 % der Höhe der Trommelschulter (9) nach der Expansion der Reifenbautrommel (1) entspricht.

6. Verfahren nach einem der vorangehenden Ansprüche, **dadurch gekennzeichnet, dass** nach Schritt d) Anroller (7) auf einen kleineren Radius verfahren werden, zum Anlegen der Innenschicht (2) und der Karkasslage (3) an die Trommelschulter (9).

7. Verfahren nach einem der vorangehenden Ansprüche, **dadurch gekennzeichnet, dass** Schritt c) und d) zeitgleich ausgeführt werden.

8. Vorrichtung (8) zur Herstellung eines Luftreifens mit einer expandierbaren Reifenbautrommel (1) sowie axial zur Reifenbautrommel (1) verfahrbaren Bälgen, **dadurch gekennzeichnet, dass** die Vorrichtung (8) dazu eingerichtet ist ein Verfahren nach einem der vorhergehenden Ansprüche durchzuführen.

9. Computerprogrammprodukt zum Betreiben einer Vorrichtung (8) zur Herstellung eines Luftreifens, umfassend Befehle, die bei der Ausführung des Programms durch zumindest eine Prozessoreinheit diese veranlasst das Verfahren nach einem der Ansprüche 1 bis 7 auszuführen.

## Claims

1. Method for producing a pneumatic tyre with an inner layer (2), a carcass ply (3), a bead core, a tyre belt and a tread strip, comprising the following steps:
a) placing the inner layer (2) and the carcass ply (3) on a tyre building drum (1) and on both sides on a supporting ring (6) respectively arranged in the axial direction of the tyre building drum (1) and respectively with a bladder (4),
b) moving the bladders axially in each case to increase the distance from the tyre building drum (1),
c) moving the bladders axially in each case to reduce the distance from the tyre building drum (1),
d) forming tyre shoulders by expanding the tyre building drum,
e) setting a bead core on the carcass ply (3) at the drum shoulder (9),
f) fixing the bead core by the radially movable core fixing (5),
g) turning up the carcass ply (3) and the inner layer (2) around the bead core by filling a bladder (4),
h) finishing the green tyre by further steps.

2. Method according to Claim 1, **characterized in that**, immediately after step a), the carcass ply (3) is rolled against the inner layer (2).

3. Method according to Claim 1 or 2, **characterized in that** the bladders are axially moved synchronously in each case to increase the distance from the tyre building drum (1) and preferably in each case to reduce the distance from the tyre building drum (1).

4. Method according to one of the preceding claims, **characterized in that** the bladders are moved in the axial direction by means of electric motors, preferably together with the supporting ring (6).

5. Method according to one of the preceding claims, **characterized in that** the bladders are moved in the axial direction in each case by an amount which corresponds to at least 30%, preferably at least 50% and more preferably at least 70%, but less than 100%, of the height of the drum shoulder (9) after the expansion of the tyre building drum (1).

6. Method according to one of the preceding claims, **characterized in that**, after step d), rollers (7) are moved to a smaller radius, for applying the inner layer (2) and the carcass ply (3) to the drum shoulder (9).

7. Method according to one of the preceding claims, **characterized in that** steps c) and d) are performed at the same time.

8. Device (8) for producing a pneumatic tyre with an expandable tyre building drum (1) and bladders that are movable axially in relation to the tyre building drum (1), **characterized in that** the device (8) is designed to perform a method according to one of the preceding claims.

9. Computer program product for operating a device (8) for producing a pneumatic tyre, comprising instructions which, when the program is executed by at least one processor unit, cause it to perform the method according to one of Claims 1 to 7.

## Revendications

1. Procédé de fabrication d'un pneumatique avec une couche intérieure (2), une nappe de carcasse (3), une tringle, une ceinture de pneu et une bande de roulement, avec les étapes suivantes :
a) pose de la couche intérieure (2) et de la nappe de carcasse (3) sur un tambour de fabrication (1) de pneu et de part et d'autre sur un anneau de support (6) disposé respectivement dans la direction axiale du tambour de fabrication (1) de pneu avec respectivement un soufflet (4),
b) déplacement axial des soufflets respectivement pour augmenter la distance par rapport au tambour de fabrication (1) de pneu,
c) déplacement axial des soufflets respectivement pour réduire la distance par rapport au tambour de fabrication (1) de pneu,
d) réalisation d'épaulements de pneu par expansion du tambour de fabrication de pneu,
e) placement d'une tringle sur la nappe de carcasse (3) sur l'épaulement (9) de tambour,
f) fixation de la tringle avec une fixation (5) de tringle pouvant être déplacée radialement,
g) repliage de la nappe de carcasse (3) et de la couche intérieure (2) autour de la tringle en remplissant un soufflet (4),
h) achèvement de l'ébauche de pneu avec d'autres étapes.

2. Procédé selon la revendication 1, **caractérisé en ce que** directement après l'étape a), la nappe de carcasse (3) est enroulée sur la couche intérieure (2).

3. Procédé selon les revendications 1 ou 2, **caractérisé en ce que** les soufflets sont déplacés chacun axialement de manière synchrone pour augmenter la distance par rapport au tambour de fabrication (1) de pneu de manière préférée pour réduire la distance par rapport au tambour de fabrication (1) de pneu.

4. Procédé selon l'une des revendications précédentes, **caractérisé en ce que** les soufflets sont déplacés dans une direction axiale au moyen de moteurs électriques, de manière préférée conjointement avec l'anneau de support (6).

5. Procédé selon l'une des revendications précédentes, **caractérisé en ce que** les soufflets sont déplacés dans la direction axiale chacun d'une distance, qui correspond au moins à 30 %, de manière préférée au moins à 50 % et de manière davantage préférée au moins à 70 %, toutefois à moins de 100 % de la hauteur de l'épaulement (9) de tambour après l'expansion du tambour de fabrication (1) de pneu.

6. Procédé selon l'une des revendications précédentes, **caractérisé en ce que**, après l'étape d), des enrouleurs (7) sont déplacés sur un rayon plus petit pour poser la couche intérieure (2) et la nappe de carcasse (3) sur l'épaulement (9) de tambour.

7. Procédé selon l'une des revendications précédentes, **caractérisé en ce que** l'étape c) et l'étape d) sont réalisées simultanément.

8. Dispositif (8) de fabrication d'un pneumatique avec un tambour de fabrication (1) de pneu pouvant être expansé ainsi qu'avec des soufflets pouvant être déplacés axialement par rapport au tambour de fabrication (1) de pneu, **caractérisé en ce que** le dispositif (8) est mis au point pour mettre en œuvre un procédé selon l'une des revendications précédentes.

9. Produit-programme d'ordinateur destiné à faire fonctionner un dispositif (8) de fabrication d'un pneumatique, comprenant des instructions qui, lorsque le programme est exécuté par au moins une unité de processeur, amènent celle-ci à exécuter le procédé selon l'une des revendications 1 à 7.
